# EUROPEAN PATENT SPECIFICATION

(11) **EP 2 070 083 B1**
(45) Date of publication and mention of the grant of the patent: **23.11.2011**
(21) Application number: 07826538.6
(22) Date of filing: 26.09.2007
(51) Int. Cl.: G10L 19/14, H04L 1/00, H04N 7/66

(54) **SYSTEM AND METHOD FOR PROVIDING REDUNDANCY MANAGEMENT**
SYSTEM UND VERFAHREN ZUR REDUNDANZVERWALTUNG
SYSTÈME ET PROCÉDÉ POUR RÉALISER UNE GESTION DE REDONDANCE

(30) Priority: 26.09.2006 US 847633 P
(43) Date of publication of application: 17.06.2009
(73) Proprietor: Nokia Corporation, 02150 Espoo (FI)
(72) Inventor: OJALA, Pasi, 02400 Kirkkonummi (FI); LAKANIEMI, Ari, 00330 Helsinki (FI)
(74) Representative: Nokia Corporation
(86) International application number: PCT/IB2007/053895
(87) International publication number: WO 2008/038229

(56) References cited:
- WO-A1-02/15625
- WO-A2-2006/056832
- SJöBERG J. ET AL.: 'TRP playload format and file storage format for the Adaptive Multi-Rate (AMR) and Adaptive Multi-Rate Wideband (AMR-WB) Audio Codecs; draft-ietf-avt-rtp-bis-06.txt' IETF STANDARD-WORKING-DRAFT 18 September 2006, XP015046626
- JOHANSSON I. ET AL.: 'Bandwidth efficient AMR operation for VOIP' SPEECH, CODING, 2002, IEEE WORKSHOP PROCEEDINGS 06 October 2002 - 09 October 2002, pages 150 - 152, XP010647243

## Description

### FIELD OF THE INVENTION

The present invention relates generally to speech coding. More particularly, the present invention relates to speech coding, error resiliency, and the transmission of speech over a packet switched network for Voice Over IP (VoIP) applications.

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

In current packet switched network transmission protocols, all of the IP packets in which bit errors are detected by a receiver are removed. In other words, upon reception, the protocol stack does not convey any distorted packets to the application layer if errors are detected. For this reason, when IP packets are transmitted over error-prone radio links or over any media that causes errors, the application layer faces some packet losses. Conversely, none of the packets that reach the application layer contain any residual bit errors in such arrangements.

Because distorted packets are not transmitted to the application layer, error concealment algorithms cannot utilize partially correct frames. However, such missing frames still must be replaced. This situation becomes even more difficult when more than one consecutive packet is lost. Various methods have been introduced to combat such packet loss conditions. Some conventional methods include the use of multiple description coding, where information is distributed over several IP packets, as well as application-level forward error correction (FEC), in which the FEC information is used to reconstruct the lost packets.

In addition to the above, another approach for addressing the issue of packet loss involves the use of redundant transmission. An advantage of redundant transmission is a low computation requirement. Redundant transmission is implemented by simply attaching the current frame and one or more previous frames within the same packet. Decoding the redundant stream is also very straightforward; when a packet is lost, the receiver only needs to wait for the next packet to arrive to obtain the corresponding frame for the decoder. A problem with the frame redundancy technique, however, involves the resulting increased bit rate. With frame redundancy, the bandwidth requirement is essentially doubled whenever another frame is attached to the IP packet at issue. Furthermore, with frame redundancy, the overall delay is increased since the receiver needs to buffer the speech frames by an amount equal to the amount of redundancy. The IETF standard working draft "RTP payload and file storage format for the Adaptive Multi-Rate (AMR) and Adaptive Multi-Rate Wideband (AMR-WB) Audio Codecs", draft-ietf-avt-rtp-bis-0.6.txt, Sjöberg J et al, 18 September 2006, discloses a method for performing error correction by using redudant transmission, where the sender selects the appropriate amount of redundancy based on feeback about the channel.

Conventional solutions for codec mode adaptation and mode selection in redundant transmission have generally involved either keeping the existing bit rate and simply copying one or more previous frames within the packet or, on the other hand, lowering the codec bit rate so that the resulting overall rate is not significantly increased. For example, when a narrow band voice call using the AMR codec is set up with 12.2 kbit/s, 100% redundancy, i.e. transmission of a current frame with one previous speech frame attached to the packet, is accomplished with a 5.9 kbit/s mode, resulting in an 11.8 kbit/s bit rate. Furthermore, a 200% redundancy, i.e. with two previous speech frames attached, is performed with a 4.75 kbit/s mode, resulting in a 14.25 kbit/s rate. AMR is an audio data compression system which uses link adaptation to select from one of eight different bit rates based on link conditions. Regarding AMR-WB, when the nominal rate is 12.65 kbit/s in a AMR-WB arrangement, for example, the 100% redundancy with the lowest feasible rate (8.85 kbit/s) results in 17.7 kbit/s. Additionally, it is always possible that the network and/or the receiving terminal may not necessarily support the codec mode that is automatically selected for redundant transmission based on the bit rate requirements.

One previously proposed system for addressing the issues discussed above can be found at www.ietforg/rfc/rfc3267.txt. In this system, a sender is responsible for selecting an appropriate amount of redundancy based upon feedback that has been received (e.g., in RTCP receiver reports) with regard to the channel being used. However, this system is reliant upon feedback and may therefore lead to issues if the appropriate information is not received from the decoding device.

It would therefore be desirable to develop a system and method that addresses the above issues.

### SUMMARY

The present invention set forth in claims 1, 9 and 10 provides a system, method and computer-readable medium for more efficiently implementing redundancy management in speech coding applications. According to various embodiments of the present invention, a sending device selects a redundant transmission level that is suitable for the current transmission channel condition while, at the same time, selecting the most suitable bit rate from the available codec mode set. With the embodiments of the present invention, the redundant transmission level that is used is always optimal with regard to the selected codec modes, and no re-negotiation of the codec is needed. The limits on the codec mode change period and mode change to only neighboring modes may limit the adaptation speed of the multi-rate codec (which is discussed at www.ietf.org/rfc/rfc3267.txt). In this case, the redundant transmission uses the intermediate modes within the negotiated adaptation limits when stepping towards the optimal codec mode configuration.The system and method of various embodiments of the present invention may be applied basically to virtually any multi-rate speech coder, such as 3GPP Adaptive Multi-Rate (AMR) and AMR-WB coders.

These and other advantages and features of the invention, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

Figure 1 shows a generic multimedia communications system for use with the present invention;

Figure 2 is a flow chart showing the implementation of various embodiments of the present invention;

Figure 3 is a perspective view of an electronic device that can be used in the implementation of the present invention; and

Figure 4 is a schematic representation of the circuitry of the mobile telephone of Figure 3.

### DETAILED DESCRIPTION OF VARIOUS EMBODIMENTS

Various embodiments of the present invention provides a system and method for more efficiently implementing redundancy management in speech coding applications. According to various embodiments of the present invention, a sending device selects a redundant transmission level that is suitable for the current transmission channel condition while, at the same time, selecting the most suitable bit rate from the available codec mode set. With embodiments of the present invention, the redundant transmission level that is used is always optimal with regard to the selected codec modes, and no re-negotiation of the codec is needed. The limits on the codec mode change period and mode change to only neighboring modes may limit the adaptation speed of the multi-rate codec (which is discussed at www.ietf.org/rfc/rfc3267.txt.) In this case, the redundant transmission uses the intermediate modes within the negotiated adaptation limits when stepping towards the optimal codec mode configuration. The system and method of various embodiments the present invention may be applied basically to virtually any multi-rate speech coder, such as 3GPP Adaptive Multi-Rate AMR and AMR-WB coders.

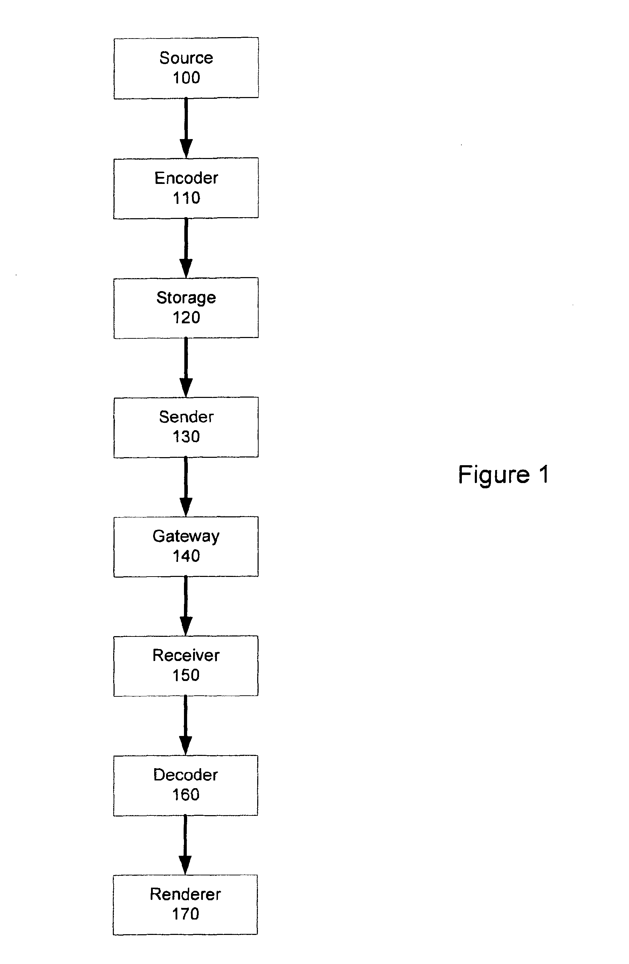

Figure 1 shows a generic multimedia communications system for use with the present invention. As shown in Figure 1, a data source 100 provides a source signal in an analog, uncompressed digital, or compressed digital format, or any combination of these formats. An encoder 110 encodes the source signal into a coded media bitstream. The encoder 110 may be capable of encoding more than one media type, such as audio and video, or more than one encoder 110 may be required to code different media types of the source signal. The encoder 110 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in the following only one encoder 110 is considered to simplify the description without a lack of generality.

The coded media bitstream is transferred to a storage 120. The storage 120 may comprise any type of mass memory to store the coded media bitstream. The format of the coded media bitstream in the storage 120 may be an elementary self-contained bitstream format, or one or more coded media bitstreams may be encapsulated into a container file. Some systems operate "live", i.e. omit storage and transfer coded media bitstream from the encoder 110 directly to the sender 130. The coded media bitstream is then transferred to the sender 130, also referred to as the server, on a need basis. The format used in the transmission may be an elementary self-contained bitstream format, a packet stream format, or one or more coded media bitstreams may be encapsulated into a container file. The encoder 110, the storage 120, and the sender 130 may reside in the same physical device or they may be included in separate devices. The encoder 110 and sender 130 may operate with live real-time content, in which case the coded media bitstream is typically not stored permanently, but rather buffered for small periods of time in the content encoder 110 and/or in the sender 130 to smooth out variations in processing delay, transfer delay, and coded media bitrate.

The sender 130 sends the coded media bitstream using a communication protocol stack. The stack may include but is not limited to Real-Time Transport Protocol (RTP), User Datagram Protocol (UDP), and Internet Protocol (IP). When the communication protocol stack is packet-oriented, the sender 130 encapsulates the coded media bitstream into packets. For example, when RTP is used, the sender 130 encapsulates the coded media bitstream into RTP packets according to an RTP payload format. Typically, each media type has a dedicated RTP payload format. It should again be noted that a system may contain more than one sender 130, but for the sake of simplicity, the following description only considers one sender 130.

The sender 130 may or may not be connected to a gateway 140 through a communication network. The gateway 140 may perform different types of functions, such as translation of a packet stream according to one communication protocol stack to another communication protocol stack, merging and forking of data streams, and manipulation of data streams according to the downlink and/or receiver capabilities, such as controlling the bit rate of the forwarded stream according to prevailing downlink network conditions. Examples of gateways 140 include multipoint conference control units (MCUs), gateways between circuit-switched and packet-switched video telephony, Push-to-talk over Cellular (PoC) servers, IP encapsulators in digital video broadcasting-handheld (DVB-H) systems, or set-top boxes that forward broadcast transmissions locally to home wireless networks. When RTP is used, the gateway 140 is called an RTP mixer and acts as an endpoint of an RTP connection.

Alternatively, the coded media bitstream may be transferred from the sender 130 to the receiver 150 by other means, such as storing the coded media bitstream to a portable mass memory disk or device when the disk or device is connected to the sender 130 and then connecting the disk or device to the receiver 150.

The system includes one or more receivers 150, typically capable of receiving, de-modulating, and de-capsulating the transmitted signal into a coded media bitstream. De-capsulating may include the removal of data that receivers are incapable of decoding or that is not desired to be decoded. The codec media bitstream is typically processed further by a decoder 160, whose output is one or more uncompressed media streams. Finally, a renderer 170 may reproduce the uncompressed media streams with a loudspeaker or a display, for example. The receiver 150, decoder 160, and renderer 170 may reside in the same physical device or they may be included in separate devices.

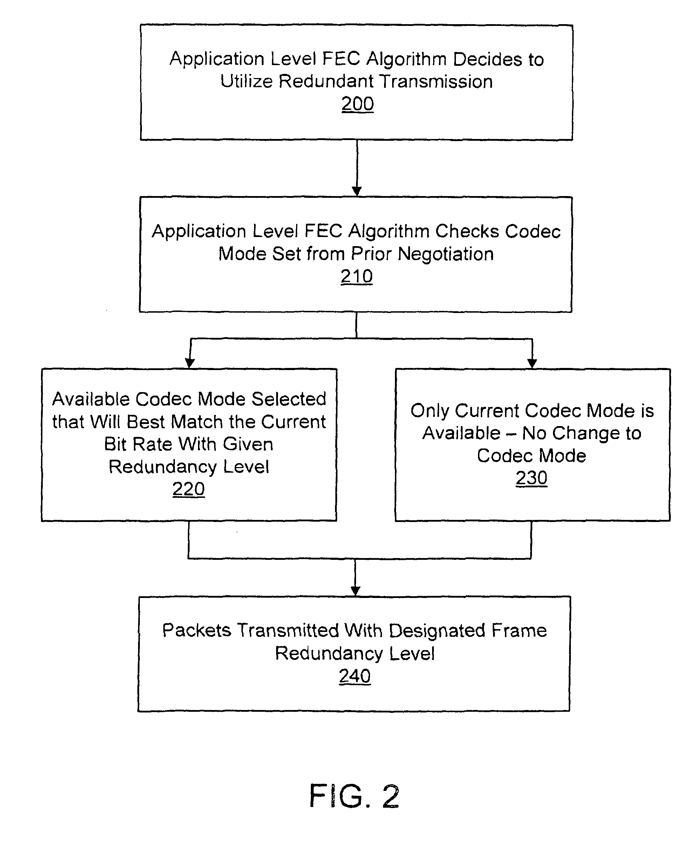

Figure 2 is a flow chart showing the implementation of one particular embodiment of the present invention. At 200 in Figure 2, an application level FEC algorithm on the sender's side decides to utilize redundant transmission. At 210, the application level FEC algorithm checks the available codec mode set that was set from a prior session description protocol (SDP) offer-answer negotiation with the receiving device. At 220, the application level FEC algorithm selects the available codec mode that will best match the current bit rate with the given redundancy level. For example, when the current rate is 12.2 kbit/s and the negotiated available codec modes are AMR-NB 12.2 kbit/s, 7.4 kbit/s and 4.75 kbit/s, the FEC algorithm selects the 7.4 kbit/s mode for 100% redundancy and 4.75 kbit/s for 200% redundancy, respectively. If the available codec modes contain only the current mode, which is represented at 230, the FEC algorithm does not change the mode. Furthermore, if the codec can only adapt the mode in every other frame due to limitations in codec mode request signaling, a mode change to a lower mode cannot be conducted immediately. The same applies when the codec has limitations in codec mode adaptation steps, i.e., when the codec can only change to the neighboring codec mode. Therefore, if the bandwidth limitations apply, the redundant transmission can be applied only after the codec has reached the desired mode suitable for the redundant transmission.

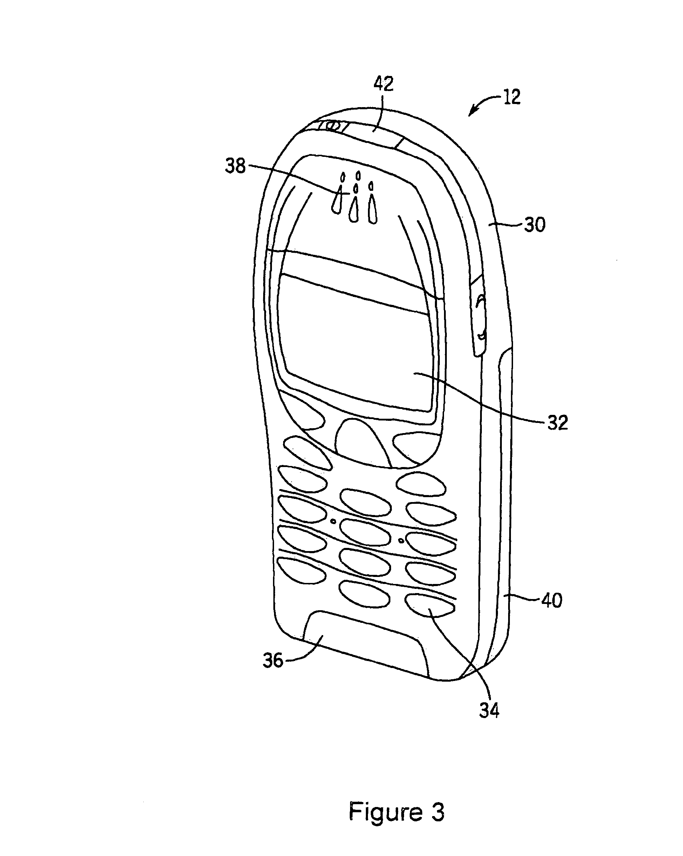

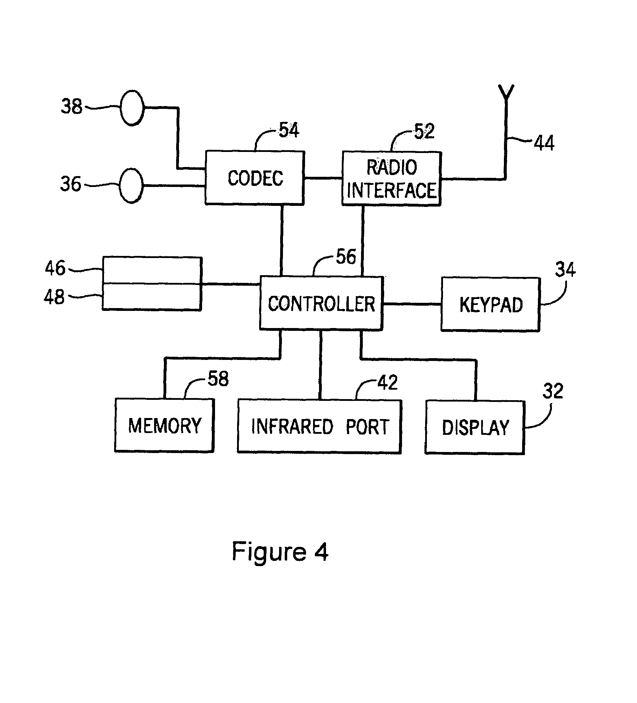

Figures 3 and 4 show one representative electronic device 12 within which the present invention may be implemented. It should be understood, however, that the present invention is not intended to be limited to one particular type of electronic device 12. The electronic device 12 of Figures 3 and 4 includes a housing 30, a display 32 in the form of a liquid crystal display, a keypad 34, a microphone 36, an ear-piece 38, a battery 40, an infrared port 42, an antenna 44, a smart card 46 in the form of a UICC according to one embodiment of the invention, a card reader 48, radio interface circuitry 52, codec circuitry 54, a controller 56 and a memory 58. Individual circuits and elements are all of a type well known in the art, for example in the Nokia range of mobile telephones.

The present invention is described in the general context of method steps, which may be implemented in one embodiment by a program product including computer-executable instructions, such as program code, executed by computers in networked environments. Generally, program modules include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps.

Software and web implementations of the present invention could be accomplished with standard programming techniques with rule based logic and other logic to accomplish the various database searching steps, correlation steps, comparison steps and decision steps. It should also be noted that the words "component" and "module," as used herein and in the claims, is intended to encompass implementations using one or more lines of software code, and/or hardware implementations, and/or equipment for receiving manual inputs.

The foregoing description of embodiments of the present invention have been presented for purposes of illustration and description. It is not intended to be exhaustive or to limit the present invention to the precise form disclosed, and modifications and variations are possible in light of the above teachings or may be acquired from practice of the present invention. The embodiments were chosen and described in order to explain the principles of the present invention and its practical application to enable one skilled in the art to utilize the present invention in various embodiments and with various modifications as are suited to the particular use contemplated.

## Claims

1. A method for implementing redundant transmission in a packet switched network, comprising:
determining available codec modes that were set from a prior negotiation with a receiving device;
selecting a codec mode from the available codec modes; and
encapsulating packets for transmission with a particular frame redundancy level selected in accordance with the selected codec mode.

2. A method according to claim 1, wherein the selected codec mode from the available codec modes is selected to most closely match a current bit rate when the particular frame redundancy level is used.

3. A method according to claim 1 or 2, wherein, if codec adaptation is limited by an adaptation rate, the particular frame redundancy level is implemented for the packet transmission only after the selected codec mode is reached.

4. A method according to any of claims 1 - 3, wherein, if codec adaptation is limited by adaptation steps to neighboring modes, the particular frame redundancy level is implemented for the packet transmission only after the selected codec mode is reached.

5. A method according to claim 1, wherein, if the only available codec mode comprises a codec mode that is currently being used, continuing to use the currently- used codec mode.

6. A method according to any of claims 1 - 5, wherein the particular frame redundancy level comprises 100% or 200% redundancy.

7. A method according to claims 1 - 6, wherein the available codec modes comprise adaptive multi-rate (AMR) codec modes or adaptive multi-rate wideband (AMR-WB) codec modes.

8. A method according to any of claims 1 - 7, wherein the prior negotiation comprises a session description protocol (SDP) offer-answer negotiation.

9. A computer-readable medium for implementing redundant transmission in a packet switched network, comprising program code realizing the method according to any of claims 1 - 8.

10. An apparatus for implementing redundant transmission in a packet switched network, comprising:
means for determining available codec modes that were set from a prior negotiation with a receiving device;
means for selecting a codec mode from the available codec modes, and
means for encapsulating packets for transmission with a particular frame redundancy level selected in accordance with the selected codec mode.

11. An apparatus according to claim 10, wherein the selected codec mode from the available codec modes is selected to most closely match a current bit rate when the particular frame redundancy level is used.

12. An apparatus according to claim 10 or 11, wherein, if codec adaptation is limited by an adaptation rate, the particular frame redundancy level is implemented for the packet transmission only after the selected codec mode is reached.

13. An apparatus according to any of claims 10 - 12, wherein, if codec adaptation is limited by adaptation steps to neighboring modes, the particular frame redundancy level is implemented for the packet transmission only after the selected codec mode is reached.

14. An apparatus according to claim 10, wherein, if the only available codec mode comprises a codec mode that is currently being used, continuing to use the currently-used codec mode.

15. An apparatus according to any of claims 10 - 14 , wherein the particular frame redundancy level comprises 100% or 200% redundancy.

16. An apparatus according to any of claims 10 - 15 , wherein the available codec modes comprise adaptive multi-rate (AMR) codec modes or adaptive multi-rate wideband (AMR-WB) codec modes.

17. An apparatus according to any of claims 10 - 16 , wherein the prior negotiation comprises a session description protocol (SDP) offer-answer negotiation.

## Patentansprüche

1. Verfahren zum Implementieren von redundanter Übertragung in einem paketvermittelten Netzwerk, umfassend:
Bestimmen verfügbarer Codec-Modi, die aufgrund einer früheren Verhandlung mit einem empfangenden Gerät eingestellt wurden;
Auswählen eines Codec-Modus aus den verfügbaren Codec-Modi; und
Einkapseln von Paketen zur Übertragung mit einem besonderen Frame-Redundanzniveau, das entsprechend dem ausgewählten Codec-Modus ausgewählt wurde.

2. Verfahren nach Anspruch 1, wobei der ausgewählte Codec-Modus aus den verfügbaren Codec-Modi so ausgewählt wird, dass bei Verwendung des besonderen Frame-Redundanzniveaus die bestmögliche Übereinstimmung mit einer aktuellen Bitrate erzielt wird.

3. Verfahren nach Anspruch 1 oder 2, wobei, wenn Codec-Anpassung durch eine Anpassungsrate begrenzt ist, das besondere Frame-Redundanzniveau für die Paketübertragung erst dann implementiert wird, nachdem der ausgewählte Codec-Modus erreicht ist.

4. Verfahren nach einem der Ansprüche 1 bis 3, wobei, wenn Codec-Anpassung durch Anpassungsschritte an benachbarte Moden begrenzt ist, das besondere Frame-Redundanzniveau für die Paketübertragung erst dann implementiert wird, nachdem der ausgewählte Codec-Modus erreicht ist.

5. Verfahren nach Anspruch 1, wobei, wenn der einzige verfügbare Codec-Modus ein gegenwärtig verwendeter Codec-Modus ist, dieser gegenwärtig verwendete Codec-Modus weiterhin verwendet wird.

6. Verfahren nach einem der Ansprüche 1 bis 5, wobei das besondere Frame-Redundanzniveau 100% oder 200% Redundanz beinhaltet.

7. Verfahren nach einem der Ansprüche 1 bis 6, wobei die verfügbaren Codec-Modi adaptive Multiraten- (AMR) Codec-Modi oder adaptive Multiraten-Breitband- (AMR-WB) Codec-Modi beinhalten.

8. Verfahren nach einem der Ansprüche 1 bis 7, wobei die frühere Verhandlung eine SDP (Session Description Protocol) Angebot-Antwort-Verhandlung beinhaltet.

9. Computerlesbares Medium zum Implementieren von redundanter Übertragung in einem paketvermittelten Netzwerk, umfassend Programmcode, der das Verfahren nach einem der Ansprüche 1 bis 8 realisiert.

10. Vorrichtung zum Implementieren von redundanter Übertragung in einem paketvermittelten Netzwerk, umfassend:
Mittel zum Bestimmen von verfügbaren Codec-Modi, die aufgrund einer früheren Verhandlung mit einem empfangenden Gerät eingestellt wurden;
Mittel zum Auswählen eines Codec-Modus aus den verfügbaren Codec-Modi, und
Mittel zum Einkapseln von Paketen zur Übertragung mit einem besonderen Frame-Redundanzniveau, das entsprechend dem ausgewählten Codec-Modus ausgewählt wurde.

11. Vorrichtung nach Anspruch 10, wobei der ausgewählte Codec-Modus aus den verfügbaren Codec-Modi so ausgewählt wird, dass bei Verwendung des besonderen Frame-Redundanzniveaus die bestmögliche Übereinstimmung mit einer aktuellen Bitrate erzielt wird.

12. Vorrichtung nach Anspruch 10 oder 11, wobei wenn Codec-Anpassung durch eine Anpassungsrate begrenzt ist, das besondere Frame-Redundanzniveau für die Paketübertragung erst dann implementiert wird, nachdem der ausgewählte Codec-Modus erreicht ist.

13. Vorrichtung nach einem der Ansprüche 10 bis 12, wobei, wenn Codec-Anpassung durch Anpassungsschritte an benachbarte Moden begrenzt ist, das besondere Frame-Redundanzniveau für die Paketübertragung erst dann implementiert wird, nachdem der ausgewählte Codec-Modus erreicht ist.

14. Vorrichtung nach Anspruch 10, wobei, wenn der einzige verfügbare Codec-Modus ein gegenwärtig verwendeter Codec-Modus ist, dieser gegenwärtig verwendete Codec-Modus weiterhin verwendet wird.

15. Vorrichtung nach einem der Ansprüche 10 bis 14, wobei das besondere Frame-Redundanzniveau 100% oder 200% Redundanz beinhaltet.

16. Vorrichtung nach einem der Ansprüche 10 bis 15, wobei die verfügbaren Codec-Modi adaptive Multiraten- (AMR) Codec-Modi oder adaptive Multiraten-Breitband- (AMR-WB) Codec-Modi beinhalten.

17. Vorrichtung nach einem der Ansprüche 10 bis 16, wobei die frühere Verhandlung eine SDP (Session Description Protocol) Angebot-Antwort-Verhandlung beinhaltet.

## Revendications

1. Procédé de mise en oeuvre d'une transmission redondante dans un réseau à commutation de paquets, comprenant les étapes consistant à:
déterminer des modes de codec disponibles qui avaient été établis à partir d'une négociation préalable avec un dispositif de réception;
sélectionner un mode de codec à partir des modes de codec disponibles;
et
encapsuler des paquets pour une transmission avec un niveau de redondance de trame particulier sélectionné en conformité avec le mode de codec sélectionné.

2. Procédé selon la revendication 1, dans lequel le mode de codec sélectionné parmi les modes de codec disponibles est sélectionné pour correspondre au plus près à un débit binaire actuel lorsque le niveau de redondance de trame particulier est utilisé,

3. Procédé selon la revendication 1 ou 2, dans lequel, si l'adaptation de codec est limitée par un débit d'adaptation, le niveau de redondance de trame particulier est mis en oeuvre pour la transmission par paquets uniquement après que le mode de codec sélectionné ait été atteint.

4. Procédé selon l'une quelconque des revendications 1 à 3, dans lequel, si l'adaptation de codec est limitée par des étapes d'adaptation à des modes voisins, le niveau de redondance de trame particulier est mis en oeuvre pour la transmission par paquets uniquement après que le mode de codec sélectionné ait été atteint.

5. Procédé selon la revendication 1, dans lequel, si le seul mode de codec disponible comporte un mode de codec qui est actuellement utilisé, l'on continue à utiliser le mode codec actuellement utilisé.

6. Procédé selon l'une quelconque des revendications 1 à 5, dans lequel le niveau de redondance de trame particulier comprend une redondance de 100% ou 200%.

7. Procédé selon les revendications 1 à 6, dans lequel les modes de codec disponibles comprennent des modes de codec multi-débit adaptatifs (« adaptative multi-rate » AMR) ou des modes de codec à grande largeur de bande multi-débit adaptatifs (« adaptive multi-rate wideband » AMR-WB).

8. Procédé selon l'une quelconque des revendications 1 à 7, dans lequel la négociation préalable comprend une négociation offre-réponse de protocole de description de session (« Session Description Protocol » SDP).

9. Support lisible par ordinateur pour la mise en oeuvre d'une transmission redondante dans un réseau à commutation de paquets, comprenant un code de programme réalisant le procédé selon l'une quelconque des revendications 1 à 8.

10. Appareil pour la mise en oeuvre d'une transmission redondante dans un réseau à commutation de paquets, comprenant:
des moyens pour déterminer des modes de codec disponibles qui avaient été établis à partir d'une négociation préalable avec un dispositif de réception;
des moyens pour sélectionner un mode de codec parmi les modes de codec disponibles, et
des moyens permettant d'encapsuler des paquets pour une transmission avec un niveau de redondance de trame particulier sélectionné en conformité avec le mode de codec sélectionné.

11. Appareil selon la revendication 10, dans lequel le mode de codec sélectionné parmi les modes de codec disponibles est sélectionné pour correspondre au plus près à un débit binaire actuel lorsque le niveau de redondance de trame particulier est utilisé.

12. Appareil selon la revendication 10 ou 11, dans lequel, si l'adaptation de codec est limitée par un débit d'adaptation, le niveau de redondance de trame particulier est mis en oeuvre pour la transmission par paquets uniquement après que le mode de codec sélectionné ait été atteint.

13. Appareil selon l'une quelconque des revendications 10 à 12, dans lequel, si l'adaptation de codec est limitée par des étapes d'adaptation à des modes voisins, le niveau de redondance de trame particulier est mis en oeuvre pour la transmission par paquets uniquement après que le mode de codec sélectionné ait été atteint.

14. Appareil selon la revendication 10, dans lequel, si le seul mode de codec disponible comporte un mode de codec qui est actuellement utilisé, l'on continue à utiliser le mode de codec utilisé actuellement.

15. Appareil selon l'une quelconque des revendications 10 à 14, dans lequel le niveau de redondance de trame particulier comprend une redondance de 100% ou 200%.

16. Appareil selon l'une quelconque des revendications 10 à 15, dans lequel les modes de codec disponibles comprennent des modes de codec multi-débit adaptatifs AMR ou des modes de codec à grande largeur de bande multi-débit adaptatifs AMR-WB.

17. Appareil selon l'une quelconque des revendications 10 à 16, dans lequel la négociation préalable comprend une négociation offre-réponse de protocole de description de session SDP.
